# EUROPÄISCHE PATENTSCHRIFT

(11) **EP 2 065 183 B1**
(45) Veröffentlichungstag und Bekanntmachung des Hinweises auf die Patenterteilung: **23.01.2013**
(21) Anmeldenummer: 08020627.9
(22) Anmeldetag: 27.11.2008
(51) Int. Cl.: B32B 21/08, B32B 21/14, B32B 21/04, B32B 21/06, B44C 5/04

(54) **Paneel, aufweisend eine Trägerplatte mit einem Echtholzfurnier**
Panel comprising a supporting panel having a real wood veneer
Panneau comprenant une plaque de support avec une feuille de placage en bois véritable

(30) Priorität: 30.11.2007 DE 102007058034
(43) Veröffentlichungstag der Anmeldung: 03.06.2009
(73) Patentinhaber: Flooring Technologies Ltd., Pieta PTA 9044 (MT)
(72) Erfinder: Vogel, Hans, 6017 Ruswil (CH)
(74) Vertreter: Kalkoff & Partner

(56) Entgegenhaltungen:
- WO-A-2006/000253
- WO-A-2007/048731
- DE-A1- 19 542 497
- US-A- 5 344 704
- US-A1- 2003 148 135
- US-A1- 2004 191 547
- US-A1- 2006 172 118

## Beschreibung

Die vorliegende Erfindung betrifft ein Paneel, das eine Trägerplatte mit einem Echtholz-Furnier aufweist. Weiterhin beschreibt die Erfindung ein Verfahren zum Herstellen eines Paneels.

Paneele, insbesondere mit Echtholzfurnieren beschichtete Trägerplatten, werden für vielfältige Verwendungen eingesetzt. Furnieroberflächen, die keiner besonderen Beanspruchung ausgesetzt sind, werden mit einer Lackierung versehen. Hoch beanspruchte Paneele, wie etwa Fußbodenbeläge oder Arbeitsplatten, werden alternativ auch mit einem Overlay versehen, um robuste und strapazierfähige Oberflächen mit hoher Abriebfestigkeit zur Verfügung zu stellen. Derartige Overlays bilden eine verschleißfeste Abschlussschicht, und sind mit duroplastischem Kunstharz imprägnierte und vorgetrocknete Trägerpapiere. Das Overlay wird unter Druck von etwa 200 bis 400 N/cm2 bei hohen Temperaturen (ca. 180° C) mit dem Echtholzfurnier auf der Sicht- bzw. Oberflächenseite verpresst.

Nachteilig ist hierbei jedoch, dass der optische Eindruck der Oberfläche des Paneels wesentlich von den Eigenschaften bzw. der Qualität des verwendeten Holzfurniers abhängt. Finden minderwertigere Furnierqualitäten Einsatz, so sind etwaige Furnierfehler auch auf der Paneeloberfläche sichtbar. Darüber hinaus besteht keine Möglichkeit, den optischen Gesamteindruck der Paneeloberfläche zu gestalten. Die bekannten Möglichkeiten, ein preiswertes Furnier nachträglich aufzuwerten, sind im Wesentlichen auf eine nachträgliche Einfärbung des Furniers beschränkt.

Oberflächen von Fußbodenbelägen, die auf Holzwerkstoffen - wie Faser- oder Spanplatten jeglicher Dichte - basieren, können dagegen auch mit anderen Mitteln gestaltet werden, z.B. mit Prägungen versehen werden. So ist aus der EP 0 546 402 ein Verfahren zum kontinuierlichen Herstellen und gleichzeitigen ein- oder beidseitigen Beschichten mit kunstharzimprägnierten Papierbahnen sowie Oberflächenstrukturieren einer Span- oder Faserplatten bekannt. Das Span- oder Faservlies wird in einer kontinuierlich arbeitenden Bandpresse unter Hitzeeinwirkung mit einer kunstharzimprägnierten Papierbahn verpresst. Hierbei wird erfindungsgemäß die Oberflächenstrukturierung während des Pressvorganges auf der Oberfläche der Papierbahn mittels eines bzw. zweier metallischer Endlos-Pressbänder mit einem Prägemuster vorgenommen. So können reliefartige Oberflächenstrukturen nach Art einer Holzmaserung, Schieferung, Sandstein- oder Phantasiestruktur und dergleichen mit oder ohne einer porengeprägten Oberflächenstruktur auf der Oberfläche der kunstharzimprägnierten Papierbahn erzeugt werden. Nachteilig ist, dass diese laminierten Holzwerkstoffplatten lediglich ein einer Holzmaserung ähnliches Aussehen aufweisen. Echtholzfurniere mit einer Original-Holzstruktur finden in diesem Verfahren hingegen keinen Einsatz.

Weiter sind aus den Druckschriften WO 2006/000253 A1, DE 195 42 497 A1, WO 2007/048731 A1 und der US 2003/0148135 A1 mit Echtholz furnierte Trägerplatten aus Holzwerkstoff bekannt, die mit einem Overlay, bestehend aus einer mit Harz getränkten Papierbahn, beschichtet sind. Das Overlay ersetzt in diesem Fall die aus dem Stand der Technik bekannte lackierte Oberflächenbeschichtung.

Aus der US 2006/0172118 A1 ein Holzfußboden bekannt, der aus einer furnierten Holzwerkstoffplatte besteht und mit einem Overlay aus Papier und Kunstharz beschichtet ist. Diese Druckschrift beschreibt zusätzlich eine weitere Versiegelungsschicht, die auf das mit Kunstharz getränkte Papier aufgetragen wird, um Schutz vor UV-Strahlung zu bieten. Ferner sind Schalldämmschichten zwischen Overlay und dem Holzwerkstoff oder auf der Rückseite des Holzwerkstoffes vorgesehen.

Die US 5,344,704 beschreibt eine besonders dicke Versiegelungsschicht auf einem Dekorpapier, um die Widerstandsfähigkeit der Oberfläche zu erhöhen. Die Versiegelungsschicht besteht dabei aus vorgehärteten Kunstharzpartikeln die in eine Matrix eingebettet werden, die aus dem gleichen Kunstharz besteht wie die Partikel. Hierbei kann als Träger für die besonders dicke Versiegelungsschicht bspw. Echtholzfurnier genutzt werden, welches jedoch nach dem Aufbringen der Versiegelungsschicht auf dem Dekor wieder entfernt wird.

Die US 2004/0191547 A1 befasst sich mit Echtholz furnierten Holzwerkstoff, auf den eine Versiegelungsschicht aufgetragen wird und ein Bedrucken der Versiegelungsschicht erfolgt. Im Anschluss daran wird ein Overlay, bestehend aus einem Kunstharz mit bspw. Zellulosefasern, auf die Versiegelungsschicht aufgetragen. Die US 2004/0191547 A1 verzichtet dabei ausdrücklich auf Papierschichten, die mit Kunstharz getränkt sind.

Eine optische Gestaltung des Overlays durch bspw. Bedrucken oder Aufbringen eines bedruckten Papiers oder durch mechanisches Einprägen von Strukturen in das Overlay vor dem Verpressen mit der Trägerplatte wird in keiner der zitierten Druckschriften beschrieben.

Es ist objektive Aufgabe der Erfindung, ein Paneel bereitzustellen, das eine Trägerplatte mit einem Echtholzfurnier aufweist, bei der das Echtholzfurnier durch optische Gestaltung einer Oberflächenbeschichtung einen hochwertigen Eindruck aufweist und welches hohe Abriebfestigkeitswerte aufweist. Eine weitere der Erfindung zugrunde liegende Aufgabe besteht ferner darin, ein Verfahren zur Herstellung eines solchen Paneels bereitzustellen.

Diese Aufgabe wird durch die in den Ansprüchen gekennzeichneten Ausführungformen gelöst. Der Aufbau des erfindungsgemäßen Paneels sieht vor, dass eine mit einem Echtholzfurnier beschichtete Trägerplatte auf der Ober- bzw. Sichtseite des Furniers mit einem Overlay versehen ist. Als Overlay können kunstharzgetränke Papiere, insbesondere Aminoplastfilme Einsatz finden. Als besonders vorteilhaft haben sich Melaminharzfilme erwiesen, die aus einem leichten Trägerpapier (von 10 bis 60 g/m2 Flächengewicht) bestehen, das in einem Tränkbad mit flüssigem Melaminharz von ca. 60 % Festkörpergehalt imprägniert ist. Die verwendeten Papierträger können bedruckt oder auch transparent und/ oder farblos sein. Des weiteren kann das Overlay auch auf in einer Melaminmatrix statistisch angeordneter Faserteile aus Cellulose basieren. Hierdurch kann ein isotroperes Overlay mit gleichmäßigen Quell- und Schwindeigenschaften zur Verfügung gestellt werden.

Das Overlay wird erfingdungsgemäß bedruckt oder mit einem transparenten bedruckten Papier versehen. Auf diesem Wege werden verschiedene optische Effekte auf der Furnieroberfläche erzielt. Kostengünstige Furniere minderer Qualität können beispielsweise derart manipuliert werden, dass sie durch das gestaltete Overlay hochwertig erscheinen - Furnicrfehler können somit ausgeglichen bzw. kaschiert werden. Es wird eine dekorative Oberfläche auf der Original-Holzstruktur erzeugt.

Als besonders vorteilhaft hat sich gezeigt, wenn das Overlay auf der dem Echtholzfurnier zugewandten Seite optisch gestaltet ist. Es ergibt sich dann eine besonders plastische Gestaltung des Echtholzfurniers.

Unter einer optischen Gestaltung ist ein direktes Bedrucken des Overlays oder des Trägerpapiers mit unterschiedlichen Dekoren zu verstehen. Ist das Overlay auf der dem Furnier zugewandten Seite optisch bearbeitet, beispielsweise bedruckt, und mit der bedruckten Seite auf das Holzfurnier gepresst, wird der Eindruck erzeugt, als ob das Furnier direkt bedruckt worden wäre. Bei der Verpressung fließt das Melaminharz in die Poren der Holzstruktur des Furniers und das Druckdekor schmiegt bzw. fügt sich somit in die dreidimensionale Holzstruktur/ Maserung und ergibt eine dreidimensionale Struktur.

Alternativ oder zusätzlich kann das Overlay mindestens abschnittsweise mit einer Schicht Beize versehen sein, die beim Aufpressen des Overlays unter dem Einfluss von Druck und Hitze tief in das darunter liegende Furnier eindringt und es farblich verändert.

Es ist als besonderer Vorteil der Erfindung anzusehen, dass die optische Gestaltung des Overlays nur abschnittsweise ausgeführt ist. Auf diese Weise können auf einem einheitlichen Furnieruntergrund allein durch Aufbringen des Overlays Intarsien-Effekte erzeugt werden. Es kann also z.B. durch das optische Gestalten des Overlays auf einem wenig strukturierten Furnier die Optik einer Intarsienarbeit mit einem Wechsel von hellem und dunklem Holz oder mit einem Wechsel von wenig und intensiv gemasertem Holz erzeugt werden.

Durch die optische Gestaltung des Overlays, insbesondere auf der dem Furnier zugewandten Seite, können spezielle optische Effekte auf der Furnieroberfläche hervorgerufen werden. Durch ein Bedrucken des Overlays können beispielsweise unterschiedliche Holz- oder Holzwerkstoffstrukturen und/oder Parkettstrukturen erzeugt werden. Typisch können z. B. Landhausdielen aber auch Zwei- oder Dreistab-Parkettstrukturen im Overlay eingearbeitet sein, sei es mit optischer oder mit zusätzlicher mechanischer Gestaltung, die dann das Echtholzfurnier überlagern. Die im Overlay eingebrachten Strukturen umfassen typischerweise Holzmaserungen, darunter Fladern, Riegel, Wurzelmaser, Harzkanäle, Käferfraß, Äste, fortlaufende Maserungen oder Holzzeichnungen aber auch Gebrauchsspuren (Kratzer, Verfärbungen), Beizeffekte oder die Kälkung der Oberfläche. Diese Effekte können in diversen Farbgebungen gestaltet sein.

Weiterhin kann nach einer bevorzugten Ausführung der Erfindung die Furnieroberfläche farblich egalisiert werden, um unerwünschte Farbnuancen z.B. eines ungleichmäßig gefärbten Echtholzfurniers auszugleichen. Hier sind auch gleichmäßige einfarbige Drucke denkbar, die geringe Opazität aufweisen und als Farbfilter fungieren.

Insbesondere ist es schließlich vorteilhaft, wenn das Overlay Markierungen für die Weiterverarbeitung aufweist, wie etwa Mittelstriche für die genaue Aufteilung/ Auftrennung der weiterzuverarbeitenden Pancele, Registerschnitte oder Rastermarkierungen.

Nach einer anderen zweckmäßigen Ausbildung der Erfindung wird das Overlay nicht bedruckt, sondern ist bereits zu Beginn seiner Herstellung mit einem bedruckten Papier - dem Trägerpapier - versehen. Auch hier stehen die vorbeschriebenen Optionen für die optische Gestaltung des Papiers zur Verfügung, ggf. in Verbindung mit einer mechanischen Gestaltung des Overlays. Soweit bedruckte Papiere eingesetzt werden, ist anzumerken, dass diese nach dem Aufbringen des Overlays die Sicht auf die Echtholzfurnier-Oberfläche nicht versperren. Diese Papiere weisen ein so geringes Flächengewicht auf und sind in der Regel frei von Füllstoffen, so dass sie transparent sind und - abgesehen vom Druckbild - den Blick auf die optisch gestaltete Echtholzfurnier-Oberfläche freigeben.

Ferner ist es vorteilhaft, das Overlay mechanisch zu formen, wodurch dreidimensionale Effekte mit Tiefenwirkung erzielt werden. Durch einen Präge- und/ oder Laservorgang können Muster, unter anderem Porenmuster, Fugen oder auch sägeraue Oberflächen dargestellt werden. Durch eine mechanische Gestaltung des Overlays können also dreidimensionale Effekte erzeugt werden. Solche reliefartigen Gestaltungen können Naturstoffe nachbilden oder frei gestaltet werden.

In einer zweckmäßigen Ausbildungsform weist das Overlay durch Einbringen von Partikeln, Pigmenten und/oder Farbstoffen in den Kunstharz-Anteil des Overlays eine weitere optische Gestaltung auf. Hierdurch sind sowohl ein Einfärben der Kunstharzschicht als auch optische Effekte, wie etwa Metallik- oder Perlmutteffekte erzielbar. Die eingefärbte Kunstharzschicht ist bevorzugt transparent, so dass sich durch die über dem Echtholzfurnier liegende, eingefärbte Kunstharzschicht optische Effekte erzielen lassen. Bei allen derartigen optischen Gestaltungen des Overlays ist es möglich und meist bevorzugt, die Gestaltung der Oberfläche abschnittsweise zu variieren, um die Möglichkeiten der Musterung auszuschöpfen.

In einer anderen vorteilhaften Ausbildung ist mindestens eine UV-absorbierende Substanz in den Kunstharz-Anteil des Overlays eingebracht. Besonders bevorzugt ist die Verwendung von UV-Absorbern auf der Basis von Nano-Partikeln, wie etwa in Form von nanoscaligem Titandioxid oder in Form von chemischen Additiven. Durch Einsatz von UV-absorbierenden Substanzen wird ein Ausbleichen der beschichteten Furniere durch Lichteinwirkung verhindert und das Paneel behält seine optischen Eigenschaften bei. Wird Titandioxid verwendet, so wird eine Nano-Partikelgröße gewählt, die der UV-Strahlung entspricht und diese absorbieren kann. Im Vergleich zu herkömmlichen Farbstoffen mit chromophoren Gruppen weist Titandioxid den Vorteil auf, dass es nicht ausbleichen kann. Titandioxid hat ferner den Vorteil, dass es kostengünstig, chemisch stabil, wasserunlöslich und ungiftig ist. Darüber hinaus besitzt Titandioxid als Weißpigment eine hohe Deckkraft sowie ein hohes Aufhellungsvermögen und kann somit auch als aufhellendes Gestaltungselement Verwendung finden. Des weiteren bewirkt der photokatalytische Effekt von Titandioxid-Nanopartikeln in Verbindung mit der UV-Aktivität eine so genannte photokatalytische Selbstreinigung der Paneeloberfläche.

In einer weiteren erfindungsgemäßen Ausführungsform enthält das Overlay auf der dem Furnier abgewandten Seite abriebfeste bzw. abrasivc Partikel, wie etwa Korund oder bei dunkler Farbgebung des Furniers dunkles Siliziumkarbid. Hierdurch wird eine besonders widerstandsfähige und insbesondere abriebfeste Overlayoberfläche bereitgestellt.

Als Trägerplatte des erfindungsgemäßen Paneels können jegliche Platten Einsatz finden. Besonders bevorzugt ist der Einsatz von Holzwerkstoffplatten, wie beispielsweise Spanplatten, OSB-Platten, Faserplatten hoher oder mittlerer Dichte, Sperrholzplatten, mineralisch gebundene Holzwerkstoffe, Holzwerkstoffe auf Kunststoffbasis aber auch Massivholzplatten. Holz-Kunststoff-Komposite sind Platten mit einem Anteil an Kunststoff, die in ihren Eigenschaften zwischen Holz, Holzwerkstoffen und Kunststoffen anzusiedeln sind. Holzwerkstoffplatten bieten den Vorteil, dass ein Trägermaterial mit relativ isotropen Eigenschaften zur Verfügung gestellt wird. Holzwerkstoffplatten stellen eine gute Form- (Quell- und Schwindmaß) und Feuchtigkeitsbeständigkeit sowie fungiziden Schutz mit gleichzeitig sehr guten Festigkeitswerten zur Verfügung. Auch Komposite aus den einzelnen, vorgenannten Plattentypen können als Trägerplatte eingesetzt werden.

Das erfindungsgemäße verwendete Overlay gewährleistet zudem, dass die Bedingungen der Nutzungsklassen für Wohnen und/ oder für den gewerblichen Bereich gemäß den Vorschriften der DIN EN 13329 und der EN 14978 erreicht werden. Hier werden insbesondere die erforderlichen Werte für starke Beanspruchung im Wohn- sowie im Objektbereich erzielt.

Die vorliegende Erfindung umfasst ferner Verfahren zum Herstellen des Overlays mit folgenden Schritten:

Ein transparentes, farbloses oder bedrucktes Kernpapier wird mit mindestens einer ersten Menge an duroplastischem Kunstharz getränkt. Als Kunstharz finden bevorzugt Aminoplastharze, weiter bevorzugt Melaminharz als kostengünstiges Kunstharz Einsatz. Das getränkte Kernpapier wird mindestens teilweises getrocknet und -falls erforderlich- mit einer zweiten Menge an Kunstharz beschichtet bzw. imprägniert. Das getränkte Kernlagenpapier kann mit einer oder mehreren Lagen Kunstharz imprägniert bzw. beschichtet werden. Nach jedem Auftrag einer lmprägnierlage erfolgt zumindest ein teilderlich-mit einer zweiten Menge an Kunstharz beschichtet bzw. imprägniert. Das getränkte Kernlagenpapier kann mit einer oder mehreren Lagen Kunstharz imprägniert bzw. beschichtet werden. Nach jedem Auftrag einer Imprägnierlage erfolgt zumindest ein teilweises Antrocknen der Kunstharzschicht, bevor die nächste Lage aufgetragen wird. Als Kunstharz findet auch hier bevorzugt ein Aminoplastharz, weiter bevorzugt Melaminharz, Verwendung. Aminoplastharze weisen den Vorteil auf, dass die einzelnen, hier aus Melaminharz gebildeten Schichten nicht nur mechanisch aneinander haften, sondern auch über chemische Bindungen miteinander verbunden werden, und so eine feste Melamin-Matrix bilden.

In einer besonders vorteilhaften Weiterbildung kann einer einzelnen Lage von Kunstharz zur optischen Gestaltung des Overlays mindestens eine weitere Substanz zugefügt werden. Typischerweise können etwa UV-absorbierende Substanzen zugesetzt werden, um ein Ausbleichen der Furnieroberfläche zu verhindern. Außerdem hat sich als vorteilhaft erwiesen, wenn einer der oberen Lagen des Overlays, der Nutzschicht, abriebfeste bzw. abrasive Partikel, wie Korund oder bei dunklem Dekor dunkles Siliziumkarbid, zugesetzt werden. Hierdurch wird eine besonders abriebfeste Oberfläche erzeugt. Ferner kann auch jede einzelne Harzlage mit Farbstoff versehen werden. Es ist insbesondere das Einbringen anderer Substanzen, wie Füllstoffe, Pigmente, Farbstoffe, Fasern und anderer Partikel zum Erzielen weiterer optischer Effekte denkbar, wie beispielsweise zum Erzielen von Beiz-, Farbfilter-, Perlmutt- und Metallikeffekte oder zum farblichen Egalisieren oder Gestalten der Holzfurnieroberfläche.

Nach dem Auftrag der einzelnen Harzschichten erfolgt die Trocknung des Overlays auf die zu erzielende Endfeuchte.

Nach einer alternativen Ausführung kann das Overlay ohne Gestaltung aus z. B. imprägniertem Kernlagenpapier und darauf aufgetragenen Kunstharzschichten hergestellt werden, die zunächst noch nicht gestaltet sind. Nach dem Trocknen des Overlays wird dieses bisher nicht gestaltete Overlay auf der Seite, die im Gebrauchszustand dem Furnier zu- und der Außenseite des Overlays abgewandt ist, optisch gestaltet werden.

Bevorzugt wird das Overlay durch Bedrucken, auch Laserdrucken gestaltet. Das Bedrucken des Overlays kann in allen gängigen Druckverfahren erfolgen, wie im Tiefdruck-, Offsetdruck-, Indirektdruck- und Digitaldruckverfahren. Ferner kann das Overlay auch mittels eines Lasers mechanisch bearbeitet werden, um dreidimensionale Effekte, wie Poren, Maserungen oder Fladern zu erzeugen.

Wird die Seite, die im Gebrauchszustand der Außenseite des Overlays abgewandt ist, eingefärbt, so nimmt die Holzfurnieroberfläche nach dem Verpressen derselben das Kunstharz mit dem Farbstoff auf. Der Farbstoff dringt in die Porenstruktur des Holzes ein und ergibt auf diese Art und Weise ein plastisches dreidimensionales Erscheinungsbild in dem gewünschten Farbton. Des Weiteren können durch ein Bedrucken des Overlays Markierungen für die Weiterverarbeitung aufgebracht werden. Solche Markierungen können Rastermarkierungen, Registerschnitte und Mittelstriche für die genaue Aufteilung sein.

Außerdem ist es auch möglich, das Overlay durch Aufbringen eines Dekorpapiers zu gestalten, d. h. ein nicht beharztes, sehr leichtes Dekorpapier wird bedruckt und mit dem beharzten Overlay auf der dem Furnier zugewandten Seite verpresst. Das beharzte Overlay weist eine hinreichende Menge an Kunstharz auf, um das Dekorpapier während des Verpressvorganges zu durchtränken und um eine gute Verbindung mit dem Furnier zu gewährleisten. Auf diese Weise können zum Beispiel Intarsien, Holzfüllungen und Holzeinlegearbeiten optisch erzeugt werden. Die Maßänderung des Overlays ist so gering, dass sie vernachlässigt werden kann; bei der Paneelfertigung treten keinerlei Probleme auf.

Das erfindungsgemäß hergestellte Overlay findet bevorzugt Verwendung zum Aufbringen auf eine Echtholz-furnierte Trägerplatte. Das Overlay wird hierfür mit einer echtholzfurnierten Trägerplatte und einem Gegenzug in der Art zusammengefügt, dass das Overlay mit der gestalteten Seite auf das Holzfurnier und der Gegenzug auf der dem Echtholzfurnier abgewandten Seite der Trägerplatte verpresst wird. Als Gegenzug wird vorzugsweise ein mit duroplastischem Kunstharz getränktes und vorgetrocknetes Papier mit einem Flächengewicht von beispielsweise 80 bis 140 g/m2 eingesetzt. Hierdurch werden Schrumpfspannungen mit einhergehender starker Verformung, die beim Aushärten der Oberflächenbeschichtung der Trägerplatte entstehen, ausgeglichen.

Als besonders vorteilhaft erweist sich während des Pressvorganges der Einsatz hochflexibler Presspolster mit erhöhtem Pressdruck. Dies bewirkt, dass sich das Overlay an die natürliche Oberflächenstruktur des Furniers anschmiegt und der Porenstruktur des Furniers folgt. Dieser Effekt könnte durch eine Vorbehandlung des Furniers, zum Beispiel durch Bürsten, verstärkt werden.

Details der Erfindung werden nachfolgend an Hand von Ausführungsbeispielen verdeutlicht. Es zeigen:
- Fig. 1: eine schematisierte Darstellung von Echtholz-furnierter Trägerplatte und gestaltetem Overlay;
- Fig. 2: eine schematisierte Darstellung von Echtholz-furnierter Trägerplatte, Dekorpapier und neutralem Overlay.

Die Erfindung betrifft eine Trägerplatte, auf die ein Echtholzfurnier aufgeleimt ist. Das Echtholzfurnier soll mit einem Overlay beschichtet werden, dass mit der Echtholz-furnierten Trägerplatte verpresst wird. Das Overlay deckt dann das Echtholzfurnier ab und bewirkt eine veränderte Gestaltung der Echtholzoberfläche und gleichzeitig deren Versiegelung. Alternativ kann ein Dekorpapier auf das Echtholzfurnier aufgelegt werden, das von einem nicht gestalteten, neutralen Overlay überdeckt wird. Beim Verpressen fließt dann das Kunstharz des neutralen Overlays durch das Dekorpapier und fixiert es auf dem Echtholzfurnier. Die Unterseite der Trägerplatte wird vor dem Verpressen mit einem Gegenzug, hier einem beleimten Kraftpapier, alternativ einem beleimten Schälfurnier oder einem mit Kunstharz imprägnierten Papier versehen, um ein Verwerfen der Trägerplatte beim Aufbringen des Overlays zu verhindern.

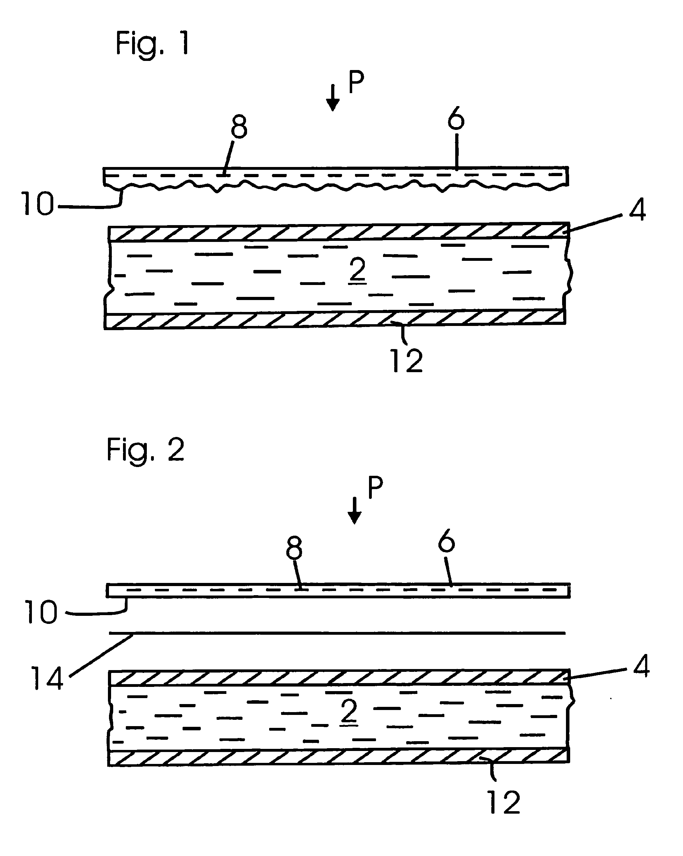

Fig.1 zeigt in nicht-maßstäblicher Darstellung eine Trägerplatte 2 aus Holzwerkstoff, hier aus mitteldichter Faserplatte (MDF). Auf diese Trägerplatte 2 ist ein Echtholzfurnier 4 aus Pappel aufgeleimt. Auf das Echtholzfurnier 4 wird das Overlay 6 aufgelegt. Das Overlay 6 besteht aus Kunstharz, das auf ein Kernpapier 8 aufgebracht und getrocknet ist. Auf der dem Echtholzfurnier 4 zugewandten Seite 10 ist das Overlay unter Einwirkung von Druck verformt. Dem Overlay wurde dabei die Porenstruktur eines Eichenfurniers eingeprägt. Die Seite 10 des Overlays ist zudem mit einer Schicht eines Beizmittels versehen, das das Echtholzfurnier beim Verpressen unter Druck und Hitze farblich verändert. Weiter ist das Kunstharz des Overlays mit Korund-Partikeln zur Verbesserung der Abriebfestigkeit und mit nanoskaligen Partikeln versehen, die zur UV-Stabilisierung des Echtholzfurniers beitragen.

Gegenzug 12, Trägerplatte 2 mit Echtholzfurnier 4 und Gegenzug 6 werden übereinander angeordnet und in eine Kurztaktpresse überführt. Bei ca. 180 °C und einem Druck von 300 N/cm² werden Gegenzug 12, Trägerplatte 2 mit Echtholzfurnier 4 und Overlay 6 miteinander verleimt. Dabei dringt die Beize unter Einwirkung von Druck und Hitze der Kurztaktpresse in das Echtholzfurnier 4 ein und bewirkt dort eine Farbänderung. Die eingeprägte Porenstruktur des Overlays 6 bleibt durch den Einsatz von hoch flexiblen Presspolstern nach dem Pressvorgang sichtbar. Sie überlagert das Echtholzfurnier 4 in der Weise, dass das Pappelfurnier nach dem Pressvorgang durch Farbänderung und Überlagerung mit einer Porenstruktur den Eindruck eines Eichenfurniers vermittelt.

Gleichzeitig versiegelt das Kunstharz des Overlays nach dem Verpressen die Echtholz-furnierte Oberfläche der Trägerplatte wirksam und erhöht so die Gebrauchsfähigkeit wesentlich. Die so beschichtete und versiegelte Trägerplatte ist z. B. als Fußbodenbelag oder als Arbeitsplatte verwendbar. Auch die hohen Anforderungen der EN 13329 oder der EN 14978 werden durch das vorbeschriebene Produkt erfüllt.

Fig. 2 zeigt eine alternative Ausführung der Erfindung. Eine Trägerplatte 2 aus Oriented Strandboard (OSB) ist mit einem Pappelfurnier 4 beschichtet. Über dem Echtholzfurnier 4 wird ein transparentes, nicht mit Kunstharz versehenes Dekorpapier 14 angeordnet. Das Dekor ist in Farbgebung und Aufteilung als 2-Stab-Nussbaum-Furnier gestaltet. Dem Holzdekor sind Kratzer und Verfärbungen überlagert, die den Eindruck eines gebrauchten Fußbodens vermitteln.

Über dem Dekorpapier 14 wird ein Overlay 6 angeordnet. Das Overlay 6 besteht aus einem Trägerpapier 8, das mit Melaminharz imprägniert und nachträglich mit weiteren Schichten von Melaminharz beschichtet und dann getrocknet wurde. In den weiteren Schichten von Melaminharz sind Korundpartikel enthalten.

Unter der Trägerplatte 2 wird ein Gegenzug 12 angeordnet, der Verformungen entgegenwirken soll, die durch das Verpressen mit dem Overlay verursacht werden. Über der Trägerplatte werden Dekorpapier 14 und Overlay 6 angeordnet.

Das Verpressen erfolgt wie im Ausführungsbeispiel zu Fig. 1 beschrieben. Beim Verpressen verflüssigt sich das Kunstharz des Overlays und fixiert das Dekorpapier 14, das es durchdringt, auf dem Echtholzfurnier 4 der Trägerplatte 2. Die so versiegelte Oberseite der Trägerplatte 2 vermittelt damit den optischen Eindruck eines 2-Stab-Nussbaum-parketts mit Gebrauchsspuren anstatt des zuvor unscheinbaren Pappelfurniers. Gleichzeitig ist das Echtholzfurnier abriebfest versiegelt und zur Verwendung als Fußbodenbelag oder als Arbeitsplatte geeignet.

## Patentansprüche

1. Paneel, aufweisend eine Trägerplatte mit einem Echtholzfurnier und einem auf dem Echtholzfurnier aufgebrachten Overlay, das Faser- und Kunstharzanteile enthält, **dadurch gekennzeichnet, dass** das Overlay auf der dem Echtholzfurnier zugewandten Seite mindestens abschnittsweise mit einem Beizmittel versehen ist oder in einem gängigen Druckverfahren wie Tiefdruck-, Offsetdruck-, Indirektdruck-, und Digitaldruckverfahren mit einem Dekor bedruckt oder mit einem transparenten bedruckten Papier versehen ist.

2. Paneel nach Anspruch 1, **dadurch gekennzeichnet, dass** das Overlay auf der dem Furnier zugewandten Seite durch Einbringen von Partikeln, Pigmenten und/oder Farbstoffen in den Kunstharz-Anteil des Overlays optisch gestaltet ist.

3. Paneel nach Anspruch 1, **dadurch gekennzeichnet, dass** das Overlay auf der dem Echtholzfurnier zugewandten Seite mechanisch gestaltet ist.

4. Paneel nach Anspruch3, dadurch gekenntzeichnet, dass ein Muster, insbesondere ein Porenmuster, in das Overlay eingeprägt ist.

5. Paneel nach einem oder mehreren der vorangehenden Ansprüche, **dadurch gekennzeichnet, dass** das Overlay in der Weise gestaltet ist, dass es Holzmaserungen, Holz- oder Holzwerkstoffstrukturen, Parkettstrukturen, Gebrauchsspuren, Beiz-, Metalliceffekte, Perlmutt-, 3-D-Effekte und/oder mindestens eine Markierung für die Weiterverarbeitung aufweist.

6. Paneel nach Anspruch 1, **dadurch gekennzeichnet, dass** mindestens eine UVabsorbierende Substanz, insbesondere nanoskalige Partikel, in den Kunstharz-Anteil des Overlays eingebracht ist.

7. Paneel nach Anspruch 1, **dadurch gekennzeichnet, dass** als Trägerplatte eine Holzwerkstoffplatte, insbesondere eine Spanplatte, eine OSB-Platte, eine Faserplatte hoher oder mittlerer Dichte, eine Holz-Kunststoff-Kompositplatte, eine Sperrholzplatte, eine Massivholzplatte oder Kompositen der vorgenannten Holzwerkstoffplatten eingesetzt ist.

8. Verfahren zum Herstellen eines Paneels mit einer Echtholz-furnierten Trägerplatte mit den Schritten:
- Tränken eines Kernpapiers mit einer ersten Menge an Kunstharz,
- Trocknen des Overlays,
- auf der Seite des Overlays, die im Gebrauchszustand der Außenseite des Overlays abgewandt ist, mindestens abschnittsweise Bedrucken des Overlays mit einem Dekor in einem gängigen Druckverfahren wie Tiefdruck-, Offsetdruck-, Indirektdruck- und Digitaldruckverfahren oder Aufbringen eines mindestens abschnittsweise bedruckten transparenten Papiers
- Aufbringen des Overlays auf eine Echtholz-furnierte Trägerplatte und
- Verpressen von Trägerplatte und Overlay zu einem Paneel.

## Claims

1. A panel comprising a supporting panel having a real wood veneer and an overlay applied to the real wood veneer that contains fiber and artificial resin parts, **characterized in that** the overlay is provided with a corrosive, at least in sections, on the side facing the real wood veneer, or is printed with a décor in a conventional printing method such as intaglio printing, offset printing, indirect printing and digital printing, or is provided with a transparent, printed paper.

2. The panel according to claim 1, **characterized in that** the overlay is visually designed on the side facing the veneer by introducing particles, pigments, and/or dyes in the artificial resin part of the overlay.

3. The panel according to claim 1, **characterized in that** the overlay is mechanically designed on the side facing the real wood veneer.

4. The panel according to claim 3, **characterized in that** a pattern, particularly a pore pattern, is imprinted in the overlay.

5. The panel according to one or more of the preceding claims, **characterized in that** the overlay is designed such that it has wood grains, wood or wooden composite structures, parquet structures, traces of use, staining effects, metallic effects, pearling effects, 3-D effects and/or at least one marking for further processing.

6. The panel according to claim 1, **characterized in that** at least one UV absorbing substance, in particular nanoscale particles, is introduced into the artificial resin part of the overlay.

7. The panel according to claim 1, **characterized in that** a wood-based material panel, particularly a chipboard panel, an OSB panel, a high or medium-density fiberboard, a wood/plastic composite panel, a plywood panel, a solid wood panel or composites of the aforementioned wood-based material panels is used as the support panel.

8. A method for manufacturing a panel with a real wood-veneered supporting panel comprising the steps:
- saturating a core paper with a first initial quantity of artificial resin,
- drying the overlay,
- on the side of the overlay that faces away from the outside of the overlay when in a state of use, printing the overlay at least in sections with a décor in a conventional printing method such as intaglio printing, offset printing, indirect printing and digital printing, or applying a transparent paper that is printed at least in sections
- applying the overlay on a real wood-veneered supporting panel, and
- pressing the supporting panel and overlay to become a panel.

## Revendications

1. Panneau comprenant une plaque de support avec une feuille de placage en bois véritable et un overlay appliqué sur la feuille de placage en bois véritable qui contient des parts de fibres et de résine synthétique, **caractérisé en ce que** l'overlay est doté au moins partiellement d'un agent mordant sur la face dirigée vers la feuille de placage en bois véritable ou est imprimé avec un décor dans un procédé d'impression courant tel que le procédé d'héliogravure, d'impression offset, d'impression indirecte et d'impression numérique ou est doté d'un papier imprimé transparent.

2. Panneau selon la revendication 1, **caractérisé en ce que** l'overlay sur la face dirigée vers la feuille de placage est formé visuellement par insertion de particules, de pigments et/ou de colorants dans la part de résine synthétique de l'overlay.

3. Panneau selon la revendication 1, **caractérisé en ce que** l'overlay est formé mécaniquement sur la face dirigée vers la feuille de placage en bois véritable.

4. Panneau selon la revendication 3, **caractérisé en ce qu'**un motif d'impression, en particulier un motif d'impression poreux, est incrusté dans l'overlay.

5. Panneau selon une ou plusieurs des revendications précédentes, **caractérisé en ce que** l'overlay est formé de telle sorte qu'il présente des effets de madrures, de textures bois ou matériau bois, de textures de parquet, de traces d'utilisation, des effets décapés, métalliques, nacrés, 3D et/ou au moins un marquage pour le traitement ultérieur.

6. Panneau selon la revendication 1, **caractérisé en ce qu'**au moins une substance absorbant les UV, en particulier des particules nanométriques, est introduite dans la part de résine synthétique de l'overlay.

7. Panneau selon la revendication 1, **caractérisé en ce que** la plaque de support se présente sous forme de plaque en matériau dérivé du bois, en particulier une plaque d'agglomérés, une plaque OSB, une plaque de fibres de densité élevée ou moyenne, une plaque composite bois/matériau synthétique, une plaque de contreplaqué, une plaque de bois massif ou des mélanges des plaques de matériau dérivé du bois précédemment mentionnées.

8. Procédé de fabrication d'un panneau avec une plaque de support contreplaquée en bois véritable comprenant les étapes suivantes ;
- imprégnation d'un papier support avec une première quantité de résine synthétique,
- séchage de l'overlay,
- sur la face de l'overlay qui est opposée à l'état d'utilisation à la face externe de l'overlay, impression au moins partielle de l'overlay avec un décor dans un procédé d'impression courant tel que le procédé d'héliogravure, d'impression offset, d'impression indirecte et d'impression numérique ou application d'un papier transparent imprimé au moins partiellement
- application de l'overlay sur une plaque de support contreplaquée en bois véritable et
- pressage de la plaque de support et de l'overlay en un panneau.
